# EUROPEAN PATENT SPECIFICATION

(11) **EP 2 307 814 B1**
(45) Date of publication and mention of the grant of the patent: **29.04.2020**
(21) Application number: 09755136.0
(22) Date of filing: 29.05.2009
(51) Int. Cl.: F24F 13/02, F16L 11/02, F16L 9/17, E21F 1/04, F16L 3/00, F16L 3/133, F16L 9/00, F16L 9/21

(54) **DUCT MEANS FOR AN AIR FLOW OR A GAS FLOW AND A METHOD FOR MANUFACTURING, HANDLING AND MOUNTING SAID DUCT MEANS**
KANALMITTEL FÜR EINEN LUFTSTROM ODER EINEN GASSTROM UND VERFAHREN ZUR HERSTELLUNG, HANDHABUNG UND BEFESTIGUNG DES KANALMITTELS
SYSTÈME DE CONDUIT POUR ÉCOULEMENT D'AIR OU DE GAZ ET PROCÉDÉ DE FABRICATION, DE MANUTENTION ET DE MONTAGE DUDIT SYSTÈME

(30) Priority: 31.05.2008 SE 0801292; 03.03.2009 SE 0900275
(43) Date of publication of application: 13.04.2011
(73) Proprietor: Malmö Air AB, 211 19 Malmö (SE)
(72) Inventor: WALLIN, Peter, S-394 77 Kalmar (SE); BERNHARDSSON, Göran, S-269 95 Båstad (SE)
(74) Representative: Noréns Patentbyrå AB
(86) International application number: PCT/SE2009/000281
(87) International publication number: WO 2009/145698

(56) References cited:
- GB-A- 1 241 413
- JP-A- S5 938 542
- US-A- 3 078 880
- US-A- 3 481 813
- US-A- 3 583 030
- US-A- 3 818 948
- US-A- 3 818 948
- US-A- 5 085 251

## Description

The present invention relates to a ventilation duct comprising a fibre material and at least one fluid impermeable surface material, with an erect position with a polygonal cross section, and a flat storage position, wherein longitudinal fold lines are provided at the corners between the adjacent walls (5, 6) for switching the duct between its erect position and its storage positions respectively.

The invention also relates to a blank for forming a ventilation duct, comprising a web of a fibre material with at least one fluid impermeable surface material, wherein longitudinal fold lines are provided, making the blank foldable into a polygonal tube shape.

Finally, the invention relates to a method of manufacturing a ventilation duct including the step of laminating a fibre material with at least one fluid impermeable material.

The ventilation ducts used today are mostly made of galvanized steel. In said ducts air shall be transferred in an over pressure or an under pressure hardly exceeding 100 mm water column (i.e. 1 kPa). Considered from an environmental point of view, venting ducts made of steel is a very doubtful choice. Besides the fact that steel for use in venting ducts is galvanized, it is also very space demanding when transported.

The demands which must be met by ventilation ducts are:
- They must not influence the quality of the air.
- They must be possible to clean.
- They must fulfil the tightness standards.
- They must meet up to the fire classifications, which first of all are about not supporting any spreading of fire and flue gases.
- They must not act in such a way that they will hinder an escape during fire.
- The material in the ducts should meet up to the European fire standard A2sld0, where A2 stands for the material being practically unburnable, s1 that the material does not create too dark flue gases and d0 that it does not drip when heated.

As a venting duct transfers heat, this must be compensated for when passing from one fire cell to another. This is often done by insulating the duct in such an extent that the temperature rise in the cell not exposed to fire is deemed to be acceptable.

A duct of steel is rigid and keeps its shape even at very high temperatures. This means, at the passage from one fire cell to the next, that a fire valve has to be installed which closes when smoke is detected. In such a way flue gases are prevented from spreading from one fire cell to another. These measures are expensive and for that reason never used e. g. in passing a wall within a fire cell, even if it would have been beneficial to do so.

Ducts of steel are relatively difficult to handle, to cut and to mount. A great amount of handcraft skill and often more than one person are needed in the handling and mounting process of a steel duct.

Further, US 3 818 948 discloses a duct the walls of which are made from an insulating blanket having laminated on both sides thereof inner and outer facing sheets. The facing sheets are made from a cloth backing laminated to a polyethylene film and the insulating blanket is made from glass fibres or any other suitable insulating material. In the side walls of the duct there is provided stiffening elements in the form of short lengths of metal wire. The metal wires are bonded to the inner facing sheet and are surrounded by the insulating material. In the event that more corner rigidity is needed or desired in the assembled and installed connector, US'948 proposes inserting wire hoops that are shaped to conform to the cross section of the conduit.

This duct is flexible and could be flattened for compact transportation.

The duct according to US 3 818 948 is made in short lengths and is used as connectors or elbows. As it is flexible it is not self-supporting and could not be used in long conduits.

US 5 085 251 discloses a rectangular, collapsible and rollable heating and ventilating duct, including top and bottom walls of a plastic-type material which may be a polycarbonate of a polyvinyl chloride, and flexible side walls. Ribs, in the top or bottom wall, may be formed by a plastic extrusion process.

The main object of the present invention is to provide a duct for air or gas flows and a blank and a method for manufacturing said duct, thereby achieving a solution to the problems mentioned above concerning expensive materials, expensive transports and storing, negative impact on the environment, complicated handling and mounting. The invention also prevents fire from spreading.

In view of the prior art, the main object is to provide a duct which is both collapsible to a flat condition and rollable, and yet self supporting in a working position.

Yet another object is to obtain a duct allowing a reduced building height and a mounting directly in connection to a wall or to a ceiling.

Still another object of the present invention is to obtain a duct for air flows or for gas flows which may easily be cut to correct lengths using a knife or a pair of scissors.

A last object of the invention is to make mounting possible even to a single and inexperienced worker.

The above mentioned objects of the present invention are obtained if the ventilation duct intimated by way of introduction is defined by the features according to claim 1. A ventilation duct comprising a fibre material and at least one fluid impermeable surface material, with an erect position with a polygonal cross section, and a flat storage position, wherein the ventilation duct comprises walls that are rigid enough to keep the duct open in its erect position is provided. Longitudinal fold lines are provided at the corners between adjacent walls for switching the duct between its erect position and its storage positions respectively. The walls have alternating soft and rigid transverse portions that extend between adjacent pairs of longitudinal fold lines so that the ventilation duct is rollable in its storage position and is self-supporting in its erect position due to the alternating soft and rigid transverse portions. The alternating soft and rigid transverse portions of the walls and the longitudinal fold lines are embossed in the material of the duct walls.

Regarding the blank the objects are attained by a blank that is defined by the features of claim 13. The blank comprises a web of fibre material with at least one fluid impermeable surface material, wherein the blank includes longitudinal fold lines, making the blank foldable into a polygonal tube shape, wherein the blank includes transverse, alternating soft and rigid portions, making the blank rollable, wherein the transverse portions and the fold lines are embossed in the web of fibre material, wherein the ventilation duct is formed in the shape of a tube by joining two lateral edges of the blank.

Further, the invention provides a method that is defined by the features of claim 15. The method of manufacturing the ventilation duct includes:
- laminating a fibre material with at least one fluid impermeable material,
- embossing rigid and soft transverse areas and longitudinal fold lines on a blank, by selectively applying heat and pressure in different areas, and
- joining two lateral edges of the blank to form the duct in the shape of a tube.

Further advantages of the invention are presented in the sub-claims.

The present embodiment will now be described in greater detail hereinbelow, with reference to the accompanying drawings. In the accompanying drawings:
figure 1 is a perspective view of a ventilation duct according to the invention in a mounted position;
figure 2 is a perspective view of the ventilation duct according to figure 1 ;
figure 3 is a close up view in cross section of a corner area of the ventilation duct according to figure 1;
figure 4 is a schematic view of the layer structure in the walls of the ventilation duct;
figure 5 is a perspective view of the ventilation duct in a storage position and partly rolled up;
figure 6a is a perspective view of a section of a blank for forming a ventilation duct according to another embodiment of the invention; and
figure 6b is a view in cross section of the blank.

### DESCRIPTION OF A PREFERRED EMBODIMENT

In the following description, the invention will be described in connection to a use as ventilation duct which does not exclude other uses, e.g. for evacuating flue gases. Generally, the duct is well suited for transporting a fluid, especially a gas.

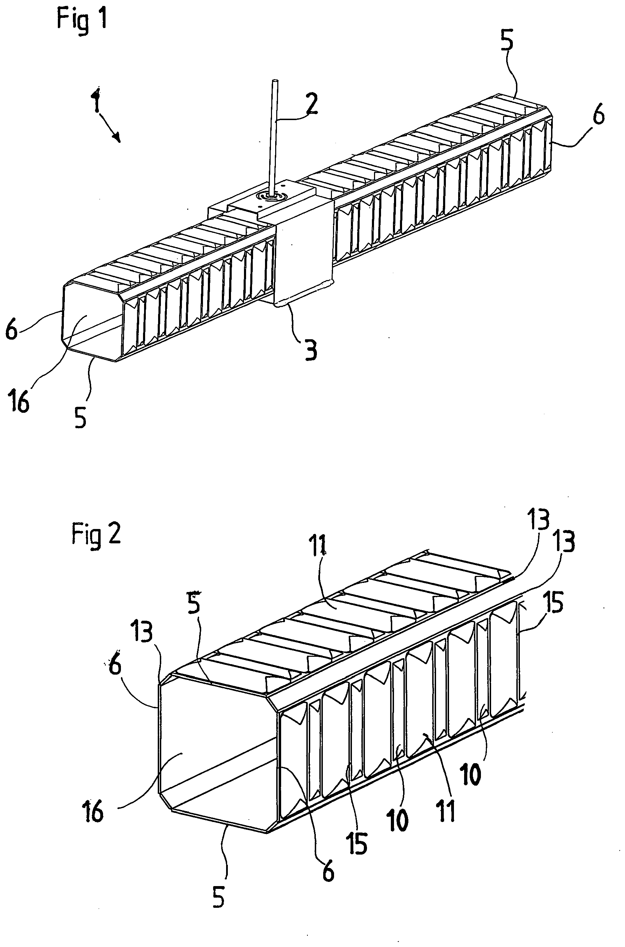

In figure 1 a portion of a ventilation duct 1 according to a preferred embodiment of the invention is shown. The shown portion of the duct 1 has a rectangular cross section, and is mounted hanging from a building structure, such as a ceiling, by means of a suitable suspension means such as threaded bars or wires 2 and brackets 3.

The wires 2 are preferably of metal or any other suitable, fire resistant material. The brackets 3 are likewise manufactured from metal, in the preferred embodiment from sheet metal. As can be seen in figure 1, the distance between two adjacent brackets 3 widely exceeds the length of each bracket 3. In the preferred embodiment the distance is up to approximately 2-3 m. Along the distance between the brackets 3, the duct 1 is rigid enough to be self-supporting. This means that a duct 1 hanging freely between two brackets 3 spaced apart 2-3 m will not hang down to any substantial degree. Also, although the brackets 3 support the duct 1, they do not assist in keeping it open. The rigidity of the duct 1 is sufficient to keep it open during normal conditions, i.e. in the absence of a fire.

Figure 2 shows a view where a number of rigid areas 10, acting as stiffening ribs, and soft areas 11 are visible on the outside of the duct 1. Both the rigid 10 and the soft areas 11 are formed integral with the walls 5, 6 of the duct 1. Also, there are fold lines 13 along the corner areas where adjacent walls 5, 6 meet. The fold lines 13 also have the function of longitudinal stiffening ribs.

The rigid areas 10 are preferably formed by pressing a fibre material, which is comprised in the duct walls 5, 6, to a high density with a small outer dimension in selected areas. The original material is preferably uniform in thickness and composition, but different areas will be compressed to a different extent. The ribs or rigid areas 10, which have been compressed to a high extent, are thus compact and has a high relative content by volume of fibres and binding agents, and a low relative content by volume of air. The rigid areas 10 are thereby resistant to deformation.

The soft areas 11, on the other hand, have a higher relative content by volume of air and a lower relative content by volume of fibres and binding agents, as they have been less compacted, although both the rigid areas 10 and the soft areas 11 have been produced from a material with a uniform and much bigger original thickness. The content of the binding agent must not be so high that the fibres in the soft areas 11 are completely fixed mutually into a rigid structure, but they are to a high extent free to move in relation to one another.

As mentioned above the rigid areas 10, i.e. the stiffening means, are integral with the material of the duct walls 5, 6. This means that the stiffening means are constituted by the wall material itself, particularly the fibre material and the hinder therein. No separate stiffening means need to be inserted into the walls 5, 6.

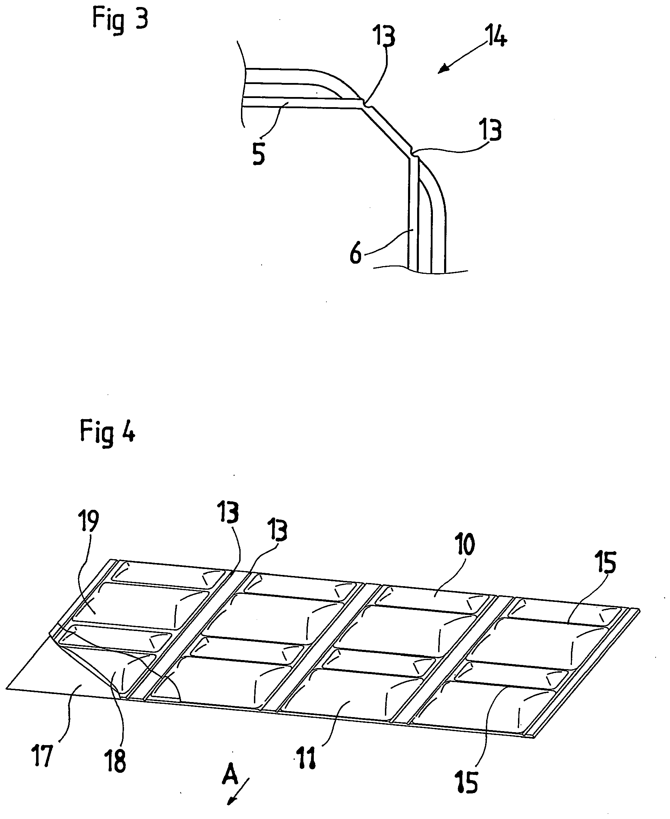

The soft areas 11 are less compact, a fact which gives them several desirable properties. First of all, they are less rigid than the rigid areas 10, i.e. they are fairly easily deformable, taken by themselves. This allows for rolling of the duct 1, even though it has rigid areas 10 which are hard to bend or otherwise deform. By placing the rigid areas 10 and the soft areas 11 alternating on the duct 1, or a blank for a duct 1, the duct 1 as a whole will be possible to roll when in a flattened condition as seen in figure 4, particularly as the rigid areas 10 have a limited extension in the direction of rolling, i.e. the longitudinal direction A of the duct. In the roll, the soft areas 11 are at least partly deformed, while the rigid areas 10 remain substantially unbent.

The alternating rigid and soft areas 10, 11 also makes the duct 1 flexible to a certain degree in the directions mainly perpendicular to the walls 5, 6 of the duct 1. This flexibility makes installations between non-aligned points possible, without the need for angled connectors and multiple joints. The bends of the duct 1 must not be too sharp, but a bending radius of approximately Im and upwards is possible in the preferred embodiment. In this way, most ventilation openings at different heights, or openings that are laterally displaced, are easily connectable provided that the distance between them is long enough to allow smooth bends.

Between the soft areas 11 and the rigid areas 10, there are narrow hinge zones 15 with a very limited thickness. Although they are very compact, regarding the fibre content by volume, their limited thickness allows for bending in these zones during rolling, especially at the borders to the soft areas 11, respectively.

The thickness and higher content of air in the soft areas 11 contribute to good sound and heat insulation properties of the duct walls 5, 6.

As is disclosed in figs 1, 2 and 4, in the preferred embodiment, all the walls 5, 6 are of the same general design with alternating soft 11 and rigid 10 areas and hinge lines 15; they could even be fully identical. However, embodiments are also conceivable where the walls 5, 6 are of different design. Thus, it would be possible that two opposing walls in a square duct have no or a lower number of rigid areas 10 than the remaining walls. Also the opposite would be possible.

The corners 14 of the duct 1, having a polygonal cross section, e.g. square, are formed in particular areas, with fold longitudinal lines 13, where the thickness of the material is approximately the same as in the hinge zones 15. Still, the original thickness of the material was the same even in these areas, but the degree of pressure, that has been applied, has been adapted to obtain the minimum thickness. This thickness is low enough to allow bending of the material to form the corners 14 of the duct 1, while the formed corners 14 in the erect duct 1, due to their angles, act as stiffening ribs and increase the rigidity of the erect duct. Hence bending of the duct 1 is possible mainly perpendicular to the walls 5, 6. The folding lines 13 at the corners 14 also contribute to the self-supporting properties of the duct 1, i.e. its rigidity is high enough, in relation to its weight, to prevent the duct 1 from unwanted bending or sagging, even over considerable duct lengths.

The inside 16 of the duct 1 is impermeable for fluids, especially air; to provide a useful duct for ventilation purposes, where air has a certain positive or negative pressure in relation to the ambient air outside the duct 1. It is of course also possible to transport other fluids, especially gases, in the duct 1. Further, the inside of the duct 1 is preferably smooth, without creases or nooks, in order to make the cleaning thereof as easy as possible. The use of a plastic film, e. g. manufactured from polyethylene or polypropylene as an inner layer 17, displays a combination of the required properties concerning impermeability and surface smoothness. Another suitable material is aluminium foil, which is mainly inorganic, and a good choice for reasons of fire prevention. Possibly, two or more materials may be combined in a laminated inner surface layer 17.

Further contributing to the smoothness of the inside 16 of the duct is an absence of joints of the duct 1 or the materials therein. Thus, the duct 1 is preferably manufactured from continuous webs of materials, and the duct 1 is cut into suitable lengths at the building site. Also, a reduced number of transverse joints will reduce the pressure drop in a ventilation system as a whole.

In order to obtain a maximum smoothness of the inside of the duct 1 at its corners 14, two fold lines 13 are provided a short distance from each other as is shown in figure 3. Instead of one single fold, where the inner angle would be approximately 90 degrees in a duct 1 with a rectangular cross section, two separate folds, with an inner angle of approximately 135 degrees respectively, will result at the fold lines 13. This reduces the risk of excess material at the folds forming undercut nooks, which would be hard to clean, at the inside of the duct 1. Another option is to arrange the fold lines 13 in groups of three, so that there will be three inner angles of 150 degrees respectively.

Figure 4 shows the structure of the walls 5, 6 of the duct 1. The inner layer 17 is thin, preferably a film. As mentioned above, the inner layer 17, which will be facing the inside of the duct 1, may be a polyethylene film or a polypropylene film, but may also be aluminium foil or a viscose layer, which is coated with silicone. For some applications, antistatic properties of the material in the inner layer 17 are important.

Suitable materials for the main layer 18 of the duct lare fibre materials such as glass wool or mineral wool. There is preferably a binding agent in the fibre material, so that the fibre material may be pressed into a particular shape, but the content of the binding agent should not be so high that rigid fibre structures appear in the areas 11 that are intended to be soft.

An outer layer 19, which is optional, provides the duct 1 with a pleasant surface appearance. The surface should be easy to clean, but must not necessarily be impermeable, in order to let possible humidity and condensate in the main layer 18 evaporate into the ambient air. A suitable material for the outer layer 19 is a non- woven material of viscose etc.

The ducts will not transfer heat and they will preferably shrink if they are exposed to temperatures of 70 to 100 degrees centigrade or more, which means that the spreading of flue gases will be minimized even within a fire cell.

Inspite of being self-supporting, the duct is soft to a certain degree, which means that fire tape, which expands when it is subjected to heat, can be used when passing through fire cells. In this way the duct may be sealed off by the expanded tape in case of a fire. This is less expensive than the corresponding necessary arrangements in ducts made of steel. Apart from that, the duct preferably includes more than 90% of inorganic material, which means that the amount of burnable material in the duct itself is minimized, which makes the duct itself fire resistant.

Thus an inorganic material is used at least in the main layer 18 in the preferred embodiment of the invention and such an inorganic material may very well be based on a volcanic mineral, but in the preferred embodiment nonwoven fibre cloth is used in the walls of the duct. In the present case, an unburnable fibre of the type glass fibre and/or rock wool fibre are used. The core of the duct wall consists of either of these fibres or both fibres in combination and constitutes more than 90 % of the total weight of the final product. Thus the content of binders is less than 10 % of the total weight.

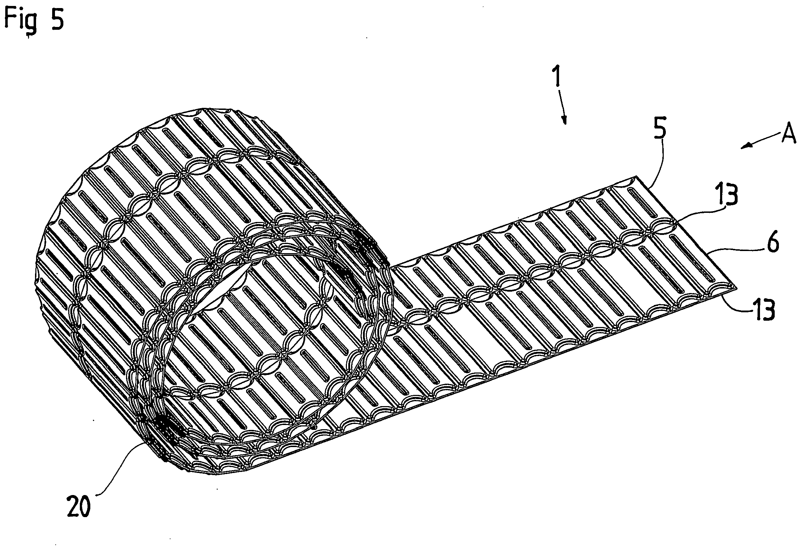

The duct may assume an erect position as well as a storage position. The erect position is shown in figures 1 and 2. In the storage position, which is shown in figure 5, the duct 1 is folded over along at least one of the fold lines 13, so that the inside surfaces of the duct 1 are in a face-to-face contact. In the flat storage position, the duct 1 may be rolled, in order to form a roll 20, which is compact and thus well suited for transport and storage. An outer package may be applied on the roll 20, according to processes which are known by the person skilled in the art.

As mentioned above, the rolling of the duct 1 in its storage position is made possible by providing hinge zones 15, as well as soft areas 11, which are bent or compressed during rolling.

The duct 1 has an air tight or fluid impermeable inner layer 17 and a conformed core in the fibre cloth so that the duct 1 will be isolated against condensate by its impermeable inner layer 17 or coating. The duct 1 will also be manufactured with a non-sealed outer layer and a conformed core in the fibre cloth in such a way that the duct 1 will insulate both regarding noise and regarding heat losses.

In cases where the duct 1 is transporting a flow of cold fluid through a humid environment at elevated temperatures it is essential that also the outer layer 19 is fluid impermeable to prevent condensation within the main layer 18 of the duct.

Thus, the duct 1 has a low weight, which makes it easy to transport and mount. The fibre material in the main layer 18 is of the same type as in heat and sound insulation, and will thus improve the properties of the duct 1 in these respects, compared to the prior art. The inside of the duct 1 is easy to clean, due to its inner layer 17, and the arrangement of pairs of fold lines 13 in the preferred embodiment will further facilitate cleaning.

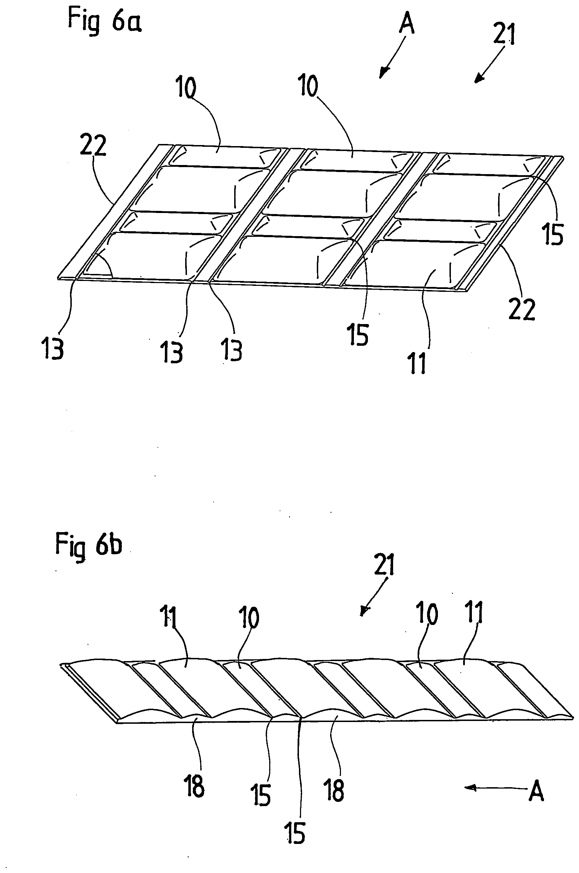

Three views of a section of a blank 21 for forming the duct 1 are shown in figures 4, 6a and 6b, where figure 6a refers to an embodiment with triangular cross sectional shape. In the preferred embodiment (figures 4 and 6b), the blank 21 is a continuous web, where the pattern of alternating rigid areas 10 and soft areas 11 is repeated. The rigid areas 10 and the soft areas 11 , as well as the hinge zones 15 between them extend mainly in the transverse direction of the blank 21.

Fold lines 13 extend in the longitudinal direction A of the blank 21 between the columns of repeated rigid areas 10 and soft areas 11. The fold lines 13 are substantially parallel with the lateral edges 22. As mentioned above, the fold lines 13 are arranged in pairs in the preferred embodiment, in order to obtain corners 14 according to figure 3 in the erect position of the duct 1.

The rigid areas 10 and the soft areas 11, and the hinge zones 15 between them are arranged in a single layer on the blank 21, which has not yet been folded. Hence, the blank 21 is reliable to at least the same extent as the duct 1 in its storage position.

In order to obtain the duct 1 from the blank 21, the blank is folded over, as shown in figure 5. The two lateral edges 22 of the blank 21 will be arranged next to each other. Any method known in the art for joining the lateral edges 22 may be used, such as gluing, heat lamination or the use of adhesive tape. Thereafter the blank 21 has been formed into the tube-shaped duct 1, in its storage position.

The method of manufacturing starts from a fairly thick web or mat of fibre material, which has been manufactured in a way which is well known for a person skilled in the art. In the preferred embodiment the thickness of the web is approximately 50-100 mm, preferably 80-90 mm. If the web consists mainly of glass wool, a surface weight of 500-2000 g/m², and preferably 600-800 g/m² has been useful in practical tests (at least for small ducts being about 12x12 cm).

First the outer layer 19 (if any) is laminated onto the main layer 18 in a conventional way, known to the person skilled in the art.

In the next step of the manufacturing process, there is a thin coating or inner layer 17, applied on that side of the blank which is to be the inside of the duct 1, which coating preferably consists of a product of pure hydrocarbon e.g. polyethene or polypropylene. It is impermeable and does not emit gases to the air and is durable enough to withstand cleaning. Preferably the inner layer 17 is in the form of a film, or an aluminium foil, which may be laminated onto the main layer 18. The lamination of the inner layer 17 may also take place at the same time as the lamination of the outer layer 19 or afterwards.

The outside of the duct 1 does not have to be covered by a specific coating. The outer fibres of the nonwoven fibre cloth in the outer layer 19 may be sprayed with a glue to create a proper outer surface. The outer layer 19 may, in fact, also be a woven material, and could e. g. comprise glass fibres and a fire retarding agent.

In the next step the pattern of alternating rigid areas 10 and soft areas 11, as well as the hinge zones 15 and the fold lines 13, are pressed, or embossed, into the outer surface and further into the main layer 18, which hinge zones 15 and fold lines 13 will be used as notches to make the duct 1 suitable for rolling, bending and mounting in a rational and simple way. Simultaneously with the application of the pressure, heat may be applied. During this process the inner layer 17 is supported on an even and smooth surface. In a preferred embodiment, the pressure is kept constant during a time period of approximately 7 seconds or more, and the temperature is approximately 200 degrees Celsius. Other combinations of temperatures and pressure times are possible, and will be realised by the person skilled in the art. The heat may be applied by contact with heated elements, such as an embossing matrix or roll, but the heating could also be performed with hot air, microwaves etc.

An alternative to direct application of pressure and/or heat is the employment of needle-felting, for creating the rigid and soft areas 10, 11. Additional portions of fibre material are bonded to the web in selected areas, by repeated punching of a set of needles through the web and the additional portions, until they are joined by felting of the fibres.

The rigid areas 10 are pressed so as to assume a thickness in the range of 6-10 mm, preferably approximately 8 mm in the preferred embodiment, i.e. into a thickness of approximately 1/10 of the original thickness of the material. The hinge zones 15 are even thinner and have a thickness in the range of 1-4 mm, preferably approximately 2 mm in the preferred embodiment. This means that these zones 15 have been pressed so as to assume a thickness of approximately 1/40 of the original thickness of the material. Finally, the soft areas 11 are pressed to assume a thickness of about 12-16 mm or about 1/7 to 1/5 of the original thickness.

In order to facilitate the bending at the fold lines 13, the fibres are preferably pre-treated, or broken, by bending the blank 21 at the fold lines 13 over an edge or by applying a narrow roll along each fold line 13, which is arranged so as to be aligned with a corresponding recess.

In the finishing step the blank 21 is folded and glued, taped or melted along its longitudinal edges 22 to make a flat duct 1, which is cut into appropriate lengths, which are rolled up, and are ready to be delivered. The recesses pressed into the outer surface are on one hand longitudinal, i.e. the fold lines 13, and on the other hand transversal, i.e. the hinge zones 15. The longitudinal recesses are four if the duct has a rectangular shape. For the preferred embodiment of figure 3, there will be four pairs of fold lines 13. Thus there may be more or less longitudinal grooves depending on the wanted shape of the final duct 1.

In a rectangular duct 1 the recesses are made in such a way that the duct 1 may be folded to a flat unit being reliable to a final package. The longitudinal recesses may also be used to facilitate the mounting of the ducts 1. The transversal recesses, or hinge zones 15, are necessary to make it possible to roll the duct.

The transversal recesses also act as reinforcements of the duct to give it an increased stability enabling its self-supporting properties.

On the building site where the duct 1 is to be installed, the duct 1 is first unrolled from the roll 20 in its storage position. Appropriate lengths of the duct 1 are cut from the roll 20. By separating the walls 5, 6 that are in surface contact with each other, and by making folds at the fold lines 13, which were previously not folded, the duct 1 is given the shape of a tube with a polygonal cross section, and its erect position is obtained.

The duct 1 is then mounted at the desired position in the building, and connected to suitable ventilation means, such as fans and the like.

Due to its hinge zones 15, and its soft areas 11, the duct 1 can be bent to a certain degree in a mounted, erect position, i.e. be allowed to be changed in direction, both sideways and between different levels, the bends having a minimum radius of about 1000 mm, as discussed previously.

The invention may be modified without departing from the scope of the appended claims.

## Claims

1. Ventilation duct comprising a fibre material (18, 19) and at least one fluid impermeable surface material (17), with an erect position with a polygonal cross section, and a flat storage position, wherein the ventilation duct comprises walls that are rigid enough to keep the duct open in its erect position, and wherein longitudinal fold lines (13) are provided at the corners between adjacent walls (5, 6) for switching the duct (1) between its erect position and its storage positions respectively, wherein the walls (5, 6) have alternating soft (11) and rigid (10) transverse portions that extend between adjacent pairs of longitudinal fold lines (13), **characterised in that** the ventilation duct is rollable in its storage position, and self-supporting in its erect position due to the alternating soft and rigid transverse portions, and **in that** the alternating soft (11) and rigid (10) transverse portions of the walls and the longitudinal fold lines (13) are embossed in the material of the duct walls (5, 6).

2. Ventilation duct according to claim 1, **characterized in that** there is provided, between adjacent soft (11) and rigid (10) portions, hinge portions (15) which are embossed in the material of the duct walls (5, 6).

3. Ventilation duct according to claim 2, wherein the hinge portions (15) have a limited thickness and are compact regarding the fibre content by volume, their limited thickness allowing for bending in these portions (15) during rolling.

4. Ventilation duct according to any one of claims 1 to 3, **characterized in that** the rigid portions (10) are thinner and have a higher density of fibres than the soft portions (11).

5. Ventilation duct according to any of claims 1 to 4, **characterized in that** the fibre material of the duct walls (5, 6) comprises a glass fibre material.

6. Ventilation duct according to any of claims 1 to 5, **characterized in that** the at least one fluid impermeable surface material (17) comprised in the duct walls (5, 6) is a plastic film.

7. Ventilation duct according to any one of claims 1 to 6, **characterized in that** the rigid portions (10) of the duct walls (5, 6) are compressed to a thickness in the range of approximately 1/10 of the thickness of the fibre material used for manufacturing the duct walls (5, 6).

8. Ventilation duct according to any one of the previous claims, **characterized in that** the fold lines (13) and the hinge zones (15) of the duct walls (5, 6) are compressed to a thickness in the range of 1/40 of the thickness of the fibre material used for manufacturing the duct walls (5, 6).

9. Ventilation duct according to any one of claims 1 to 8, **characterized in that** the soft portions (11) of the duct walls (5, 6) are compressed to a thickness in the range of about 1/7 to 1/5 of the thickness of the fibre material used for manufacturing the duct walls (5, 6).

10. Ventilation duct according to any of claims 1 to 9, **characterized in that** its rigidity by provision of the fold lines (13), hinge zones (15), and rigid areas (10) is high enough to support its weight.

11. Ventilation duct according to any of the preceding claims, wherein the duct (1) is self-supporting such that the duct (1) hanging freely between two brackets (3) spaced apart 2-3 m will not hang down to any substantial degree.

12. Ventilation duct according to any of the preceding claims, wherein the duct has been made using a blank (21) comprising a web of a fibre material (18) with at least one fluid impermeable surface material (17).

13. Blank for forming a ventilation duct (1) according to any of claims 1 to 12, the blank (21) comprising a web of a fibre material (18) with at least one fluid impermeable surface material (17), wherein the blank (21) includes longitudinal fold lines (13), making the blank (21) foldable into a polygonal tube shape, wherein the blank (21) includes transverse, alternating soft (11) and rigid (10) portions, making the blank (21) rollable, wherein the transverse portions (10, 11) and the fold lines (13) are embossed in the web of fibre material (18), wherein the ventilation duct is formed in the shape of a tube by joining two lateral edges (22) of the blank (21).

14. Blank according to claim 13, **characterized in that** the transverse soft and rigid portions (11, 10) extend intermittently between the fold lines (13).

15. Method of manufacturing a ventilation duct (1) according to any of claims 1-12, including:
- laminating a fibre material (18) with at least one fluid impermeable material (17),
- embossing rigid (10) and soft (11) transverse areas and longitudinal fold lines (13), by selectively applying heat and pressure in different areas (10, 11, 13, 15), thereby forming a blank for forming the ventilation duct (1) and
- joining two lateral edges (22) of the blank (21) to form the duct (1) in the shape of a tube.

16. Method according to claim 15, **characterized in that** a higher pressure is applied to the areas (10) which are to be rigid then to the areas which are to be soft (11).

17. Method according to claim 15 or 16, **characterized in that** it includes the step of folding the blank (21) along at least one of its fold lines (13).

18. Method according to any of claims 15-17, **characterized in that** the duct (1) is rolled up to its storage position and packaged for transportation.

19. Method according to any of claims 15-18, **characterized in that** at least one of the comprised materials is provided in the form of a continuous web.

## Patentansprüche

1. Lüftungskanal, der ein Fasermaterial (18, 19) und mindestens ein flüssigkeitsundurchlässiges Oberflächenmaterial (17) aufweist, mit einer aufrechten Position mit einem polygonalen Querschnitt und einer flachen Lagerungsposition, wobei der Lüftungskanal Wände aufweist, die starr genug sind, um den Kanal in seiner aufrechten Position offen zu halten, und wobei Längsfaltlinien (13) an den Ecken zwischen benachbarten Wänden (5, 6) vorgesehen sind, um den Kanal (1) jeweils zwischen seiner aufrechten Position und seiner Lagerungsposition umzustellen, wobei die Wände (5, 6) abwechselnd weiche (11) und starre (10) Querabschnitte aufweisen, die sich zwischen benachbarten Paaren von Längsfaltlinien (13) erstrecken, **dadurch gekennzeichnet, dass** der Lüftungskanal in seiner Lagerungsposition zusammenrollbar ist und in seiner aufrechten Position aufgrund der abwechselnd weichen und starren Querabschnitte selbsttragend ist, und dass die abwechselnd weichen (11) und starren (10) Querabschnitte der Wände und die Längsfaltlinien (13) in das Material der Kanalwände (5, 6) eingeprägt sind.

2. Lüftungskanal nach Anspruch 1, **dadurch gekennzeichnet, dass** zwischen benachbarten weichen (11) und starren (10) Abschnitten Scharnierabschnitte (15) vorgesehen sind, die in das Material der Kanalwände (5, 6) eingeprägt sind.

3. Lüftungskanal nach Anspruch 2, wobei die Scharnierabschnitte (15) eine begrenzte Dicke haben und hinsichtlich des Fasergehaltes nach Volumen kompakt sind, wobei ihre begrenzte Dicke ein Biegen in diesen Abschnitten (15) während des Zusammenrollens ermöglicht.

4. Lüftungskanal nach einem der Ansprüche 1 bis 3, **dadurch gekennzeichnet, dass** die starren Abschnitte (10) dünner sind und eine höhere Faserdichte haben als die weichen Abschnitte (11).

5. Lüftungskanal nach einem der Ansprüche 1 bis 4, **dadurch gekennzeichnet, dass** das Fasermaterial der Kanalwände (5, 6) aus einem Glasfasermaterial besteht.

6. Lüftungskanal nach einem der Ansprüche 1 bis 5, **dadurch gekennzeichnet, dass** das mindestens eine fluidundurchlässige Oberflächenmaterial (17), das in den Kanalwänden (5, 6) enthalten ist, eine Kunststofffolie ist.

7. Lüftungskanal nach einem der Ansprüche 1 bis 6, **dadurch gekennzeichnet, dass** die starren Abschnitte (10) der Kanalwände (5, 6) auf eine Dicke im Bereich von etwa 1/10 der Dicke des zur Herstellung der Kanalwände (5, 6) verwendeten Fasermaterials komprimiert sind.

8. Lüftungskanal nach einem der vorherigen Ansprüche, **dadurch gekennzeichnet, dass** die Faltlinien (13) und die Scharnierzonen (15) der Kanalwände (5, 6) auf eine Dicke im Bereich von 1/40 der Dicke des zur Herstellung der Kanalwände (5, 6) verwendeten Fasermaterials komprimiert sind.

9. Lüftungskanal nach einem der Ansprüche 1 bis 8, **dadurch gekennzeichnet, dass** die weichen Abschnitte (11) der Kanalwände (5, 6) auf eine Dicke im Bereich von etwa 1/7 bis 1/5 der Dicke des zur Herstellung der Kanalwände (5, 6) verwendeten Fasermaterials komprimiert sind.

10. Lüftungskanal nach einem der Ansprüche 1 bis 9, **dadurch gekennzeichnet, dass** seine Steifigkeit durch die Anordnung der Faltlinien (13), Scharnierzonen (15) und starren Bereiche (10) hoch genug ist, um sein Gewicht zu tragen.

11. Lüftungskanal nach einem der vorhergehenden Ansprüche, wobei der Kanal (1) selbsttragend ist, so dass der Kanal (1) frei zwischen zwei voneinander 2-3 m beabstandeten Halterungen (3) hängend nicht wesentlich nach unten hängt.

12. Lüftungskanal nach einem der vorhergehenden Ansprüche, wobei der Kanal unter Verwendung eines Rohlings (21) hergestellt wurde, der eine Bahn aus einem Fasermaterial (18) mit mindestens einem fluidundurchlässigen Oberflächenmaterial (17) umfasst.

13. Rohling zur Bildung eines Lüftungskanals (1) nach einem der Ansprüche 1 bis 12, wobei der Rohling (21) eine Bahn aus einem Fasermaterial (18) mit mindestens einem fluidundurchlässigen Oberflächenmaterial (17) umfasst, wobei der Rohling (21) Längsfaltlinien (13) aufweist, die den Rohling (21) in eine polygonale Rohrform faltbar machen, wobei der Rohling (21), abwechselnd weiche (11) und starre (10) Querabschnitte aufweist, die den Rohling (21) zusammenrollbar machen, wobei die Querabschnitte (10, 11) und die Faltlinien (13) in die Bahn aus Fasermaterial (18) eingeprägt sind, wobei der Lüftungskanal in der Form eines Rohres durch Verbinden zweier Seitenkanten (22) des Rohlings (21) ausgebildet ist.

14. Rohling nach Anspruch 13, **dadurch gekennzeichnet, dass** sich die weichen und starren Querabschnitte (11, 10) intermittierend zwischen den Faltlinien (13) erstrecken.

15. Verfahren zur Herstellung eines Lüftungskanals (1) nach einem der Ansprüche 1-12, umfassend:
- Laminieren eines Fasermaterials (18) mit mindestens einem fluidundurchlässigen Material (17),
- Prägen starrer (10) und weicher (11) Querbereiche und Längsfaltlinien (13) durch selektives Aufbringen von Wärme und Druck in verschiedenen Bereichen (10, 11, 13, 15), wodurch ein Rohling zum Formen des Lüftungskanals (1) gebildet wird, und
- Verbinden zweier Seitenkanten (22) des Rohlings (21), um den Kanal (1) in Form eines Rohres zu bilden.

16. Verfahren nach Anspruch 15, **dadurch gekennzeichnet, dass** auf die Bereiche (10), die starr sein sollen, ein höherer Druck ausgeübt wird als auf die Bereiche, die weich sein sollen (11).

17. Verfahren nach Anspruch 15 oder 16, **dadurch gekennzeichnet, dass** es den Schritt des Faltens des Rohlings (21) entlang mindestens einer seiner Faltlinien (13) umfasst.

18. Verfahren nach einem der Ansprüche 15-17, **dadurch gekennzeichnet, dass** der Kanal (1) in seine Lagerposition aufgerollt und für den Transport verpackt wird.

19. Verfahren nach einem der Ansprüche 15-18, **dadurch gekennzeichnet, dass** mindestens eines der enthaltenen Materialien in Form einer kontinuierlichen Bahn bereitgestellt wird.

## Revendications

1. Conduit de ventilation comprenant un matériau fibreux (18, 19) et au moins un matériau de surface imperméable aux fluides (17), avec une position dressée à section transversale polygonale, et une position de stockage à plat, dans lequel le conduit de ventilation comprend des parois qui sont suffisamment rigides pour maintenir le conduit ouvert dans sa position dressée, et dans lequel des lignes de pliage (13) longitudinales sont prévues aux coins entre des parois (5, 6) adjacentes pour faire passer le conduit (1) respectivement entre sa position dressée et ses positions de stockage, dans lequel les parois (5, 6) ont des parties transversales alternativement souples (11) et rigides (10) qui s'étendent entre des paires adjacentes de lignes de pliage (13) longitudinales, **caractérisé en ce que** le conduit de ventilation est enroulable dans sa position de stockage, et autoportant dans sa position dressée, en raison des parties transversales alternativement souples et rigides, et **en ce que** les parties transversales alternativement souples (11) et rigides (10) des parois et des lignes de pliage (13) longitudinales sont gaufrées dans le matériau des parois de conduit (5, 6).

2. Conduit de ventilation selon la revendication 1, **caractérisé par** des parties de charnière (15), qui sont gaufrées dans le matériau des parois de conduit (5, 6), prévues entre des parties adjacentes souples (11) et rigides (10).

3. Conduit de ventilation selon la revendication 2, dans lequel les parties de charnière (15) ont une épaisseur limitée et sont compactes en matière de teneur en fibres en volume, leur épaisseur limitée permettant de plier ces parties (15) lors de l'enroulement.

4. Conduit de ventilation selon l'une quelconque des revendications 1 à 3, **caractérisé en ce que** les parties rigides (10) sont plus minces et ont une densité de fibres plus élevée que les parties souples (11).

5. Conduit de ventilation selon l'une quelconque des revendications 1 à 4, **caractérisé en ce que** le matériau fibreux des parois de conduit (5, 6) comprend un matériau en fibre de verre.

6. Conduit de ventilation selon l'une quelconque des revendications 1 à 5, **caractérisé en ce qu'**au moins un matériau de surface imperméable aux fluides (17) compris dans les parois de conduit (5, 6) est un film plastique.

7. Conduit de ventilation selon l'une quelconque des revendications 1 à 6, **caractérisé en ce que** les parties rigides (10) des parois de conduit (5, 6) sont comprimées à une épaisseur dans la plage d'approximativement 1/10 de l'épaisseur du matériau fibreux utilisé pour la fabrication des parois de conduit (5, 6).

8. Conduit de ventilation selon l'une quelconque des revendications précédentes, **caractérisé en ce que** les lignes de pliage (13) et les zones de charnière (15) des parois de conduit (5, 6) sont comprimées à une épaisseur dans la plage de 1/40 de l'épaisseur du matériau fibreux utilisé pour la fabrication des parois de conduit (5, 6).

9. Conduit de ventilation selon l'une quelconque des revendications 1 à 8, **caractérisé en ce que** les parties souples (11) des parois de conduit (5, 6) sont comprimées à une épaisseur dans la plage d'environ 1/7 à 1/5 de l'épaisseur du matériau fibreux utilisé pour la fabrication des parois de conduit (5, 6).

10. Conduit de ventilation selon l'une quelconque des revendications 1 à 9, **caractérisé en ce que** sa rigidité, grâce à la présence des lignes de pliage (13), des zones de charnière (15) et des zones rigides (10), est suffisamment élevée pour supporter son poids.

11. Conduit de ventilation selon l'une quelconque des revendications précédentes, dans lequel le conduit (1) est autoportant, de sorte que le conduit (1), suspendu librement entre deux supports (3) espacés de 2 à 3 m, ne pende pas dans une mesure substantielle.

12. Conduit de ventilation selon l'une quelconque des revendications précédentes, dans lequel le conduit a été réalisé en utilisant un flan (21) comprenant une bande d'un matériau fibreux (18) avec au moins un matériau de surface imperméable aux fluides (17).

13. Flan pour former un conduit de ventilation (1) selon l'une quelconque des revendications 1 à 12, le flan (21) comprenant une bande d'un matériau fibreux (18) avec au moins un matériau de surface imperméable aux fluides (17), dans lequel le flan (21) comporte des lignes de pliage (13) longitudinales, rendant le flan (21) pliable en forme de tube polygonal, dans lequel le flan (21) comporte des parties transversales alternativement souples (11) et rigides (10), rendant le flan (21) enroulable, dans lequel les parties transversales (10, 11) et les lignes de pliage (13) sont gaufrées dans la bande de matériau fibreux (18), dans lequel le conduit de ventilation est formé en forme de tube en joignant deux bords latéraux (22) du flan (21).

14. Flan selon la revendication 13, **caractérisé en ce que** les parties transversales souples et rigides (11, 10) s'étendent par intermittence entre les lignes de pliage (13).

15. Procédé de fabrication d'un conduit de ventilation (1) selon l'une quelconque des revendications 1 à 12, comportant les étapes suivantes :
- stratifier un matériau fibreux (18) avec au moins un matériau imperméable aux fluides (17),
- gaufrer des zones transversales rigides (10) et souples (11) et des lignes de pliage (13) longitudinales, en appliquant sélectivement de la chaleur et une pression sur différentes zones (10, 11, 13, 15), formant ainsi un flan pour former le conduit de ventilation (1) et
- joindre deux bords latéraux (22) du flan (21) pour former le conduit (1) sous la forme d'un tube.

16. Procédé selon la revendication 15, **caractérisé en ce qu'**une pression plus élevée est appliquée sur les zones (10) qui doivent être rigides que sur les zones qui doivent être souples (11).

17. Procédé selon la revendication 15 ou 16, **caractérisé en ce qu'**il comporte l'étape consistant à plier le flan (21) le long d'au moins une de ses lignes de pliage (13).

18. Procédé selon l'une quelconque des revendications 15 à 17, **caractérisé en ce que** le conduit (1) est enroulé à sa position de stockage et emballé pour le transport.

19. Procédé selon l'une quelconque des revendications 15 à 18, **caractérisé en ce qu'**au moins un des matériaux compris soit prévu sous forme d'une bande continue.
